# EUROPEAN PATENT SPECIFICATION

(11) **EP 4 199 707 B1**
(45) Date of publication and mention of the grant of the patent: **13.08.2025**
(21) Application number: 22731827.6
(22) Date of filing: 30.04.2022
(51) Int. Cl.: A01K 1/00

(54) **METHOD FOR REMOVING AMMONIA FROM STABLE AIR**
VERFAHREN ZUR ENTFERNUNG VON AMMONIAK AUS STALLLUFT
PROCÉDÉ D'ÉLIMINATION D'AMMONIAC PRÉSENT DANS L'AIR D'UNE ÉCURIE

(30) Priority: 30.04.2021 NL 2028125
(43) Date of publication of application: 28.06.2023
(73) Proprietor: Van de Ven Beheer B.V., 5521 DZ Eersel (NL)
(72) Inventor: VEN, VAN DE, Dick Hendrikus Cornelis, 5521NB Eersel (NL)
(74) Representative: Verhees, Godefridus Josephus Maria
(86) International application number: PCT/NL2022/050234
(87) International publication number: WO 2022/231432

(56) References cited:
- EP-A1- 2 923 565
- ASHTARI AHMAD KALBASI ET AL: "Removing ammonia from air with a constant pH, slightly acidic water spray wet scrubber using recycled scrubbing solution", FRONTIERS OF ENVIRONMENTAL SCIENCE, HIGHER EDUCATION PRESS, BEIJING, vol. 10, no. 6, 21 September 2016 (2016-09-21), pages 1 - 10, XP036059921, ISSN: 2095-2201, [retrieved on 20160921], DOI: 10.1007/S11783-016-0869-3
- MELSE R W ET AL: "AIR SCRUBBING TECHNIQUES FOR AMMONIA AND ODOR REDUCTION AT LIVESTOCK OPERATIONS: REVIEW OF ON-FARM RESEARCH IN THE NETHERLANDS", TRANSACTIONS OF THE ASAE, 30 November 2005 (2005-11-30), XP055977839, Retrieved from the Internet <URL:https://edepot.wur.nl/31455> [retrieved on 20221104]

## Description

### Technical field of the invention

The invention relates to a method for removing ammonia from stable air, wherein stable air in a livestock shed is led to the outside via an air scrubber and outside air is fed in, which air scrubber is provided with an inlet opening through which the stable air enters the air scrubber and an outlet opening through which the cleaned stable air is let out, into which air scrubber the stable air is passed over a cooling body and thereby contacts an outer surface of the cooling body and in which air scrubber this outer surface of the cooling body is moistened by a first fluid being a cleaning liquid, a liquid with a pH of less than 5, preferably less than 4, is used as the cleaning liquid, and that the cooling body is cooled by a second fluid, which is different from the first fluid, being a cooling medium, wherein the cooling body is hollow and is cooled by contacting an inner surface of the cooling body with the cooling medium.

### Background of the invention

Such a method is known from EP 2 923 565 A. In this known method a cooling liquid extracts heat from the cleaning liquid which circulates in the air scrubber and the outside air extracts heat from cooling liquid . The cleaning liquid not only has to remove dust particles from the air, as is the case with an air scrubber, but the cleaning liquid also has to bind the ammonia. By using a cleaning liquid with a low pH, ammonia is absorbed by the cleaning liquid, which also removes the ammonia from the air in the stable. The ammonia content results from the equilibrium between gaseous ammonia and ammonium in the cleaning liquid, this equilibrium being strongly influenced by the temperature (the lower the temperature, the more ammonium and the less ammonia can be in the cleaning liquid). So by cooling the filter material of the air scrubber during the process of binding the ammonia, ammonia can be removed from the stable air efficiently.

### Summary of the invention

An object of the invention is to provide a method of the type described in the preamble, wherein the efficiency of removing ammonia by the cleaning liquid is higher than in the known method. To this end, the method according to the invention is characterized in that outside air is used as the cooling medium which is sucked or blown from outside the stable into the stable through the hollow cooling body. Because of direct heat exchange between the cold outside air and the cleaning liquid the latter is cooled more efficiently.

An embodiment of the device according to the invention is characterized in that a cooling body is used which comprises filter material. By moistening the filter material with cleaning liquid and letting the stable air to be cleaned flow past the filter material, the contact surface between the stable air to be cleaned and the cleaning liquid is increased, resulting in better cleaning.

A further embodiment of the device according to the invention is characterized in that a tube is used as the cooling body. The cleaning liquid can be passed through a tube without much resistance, so that a good heat transfer takes place. Preferably, a flat tube is used as the cooling body in order to increase the heat transfer surface.

In order to further improve the efficiency of the cleaning process, a further embodiment of the method is characterized in that cleaning liquid is periodically sprayed onto the outer surface of the cooling body. The cleaning liquid is distributed over a large surface of the cooling body by the stable air flowing past the cooling body, and the stable air therefore comes into contact with the cleaning liquid over a large area, so that efficient cleaning is achieved. The time interval between spraying periods is preferably adapted to the degree of humidification of the stable air and/or of the cooling body, which is determined by sensors.

In order to further improve the efficiency of the cleaning process, a further embodiment of the method is characterized in that in the inlet opening and in the outlet opening the ammonia content of the stable air entering and leaving the air scrubber is measured and the quantity, the time interval and the pH value of the cleaning liquid to be sprayed is adjusted to the measured values.

### Brief description of the drawings

The invention will be further elucidated below on the basis of drawings in which embodiments of a device are shown with which the method according to the invention can be carried out. Herein is:
Figure 1 a schematic representation of a first embodiment of the device in vertical longitudinal section; and
Figure 2 the cooling body of a second embodiment of the device.

### Detailed description of the drawings

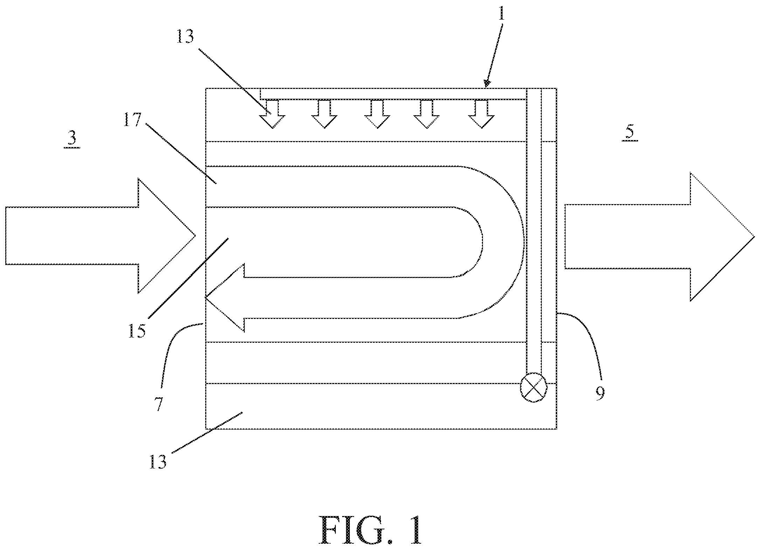

Figure 1 shows a schematic vertical longitudinal section of a first embodiment of a device with which the method according to the invention can be carried out. The device is formed by an air scrubber 1 which is provided with an inlet opening 7 via which the stable air 3 enters the air scrubber and an outlet opening 9 via which the cleaned stable air 3 is let out. Filter material 15 is present in the housing of the air scrubber. Via the space between the filter material 15, stable air 3 is fed from the stable to the environment outside the stable, and the filter material 15 is cooled by a cooling medium 17. The cooling medium 17 hereby extracts heat via the filter material 15 from the stable air 3 flowing along the filter material 15..

By using a liquid with a low pH, preferably lower than 4, as the cleaning liquid, the ammonia in the stable air is removed by the cleaning liquid. The filter material 15 is not continuously wetted, but periodically for efficiency reasons with cleaning liquid 13 for which, for example, acidified water can be used. The stable air 3 flowing along the filter material 15 thus comes into contact with the cleaning liquid over a large area. The cleaning liquid 13 is carried along and over the filter material 15 by the stable air 3 flowing in via the inlet opening 7 .

Wetting of the filter material 15 takes place discontinuously, wherein the degree of wetting and decrease in the amount of moisture in this area of the filter material 15 determine the time interval of the discontinuous spraying process. Optionally, the spraying of cleaning liquid, viewed over the length of the filter material 15, can be repeated by sprayers arranged above the filter material 15 at a distance from each other. The flushing area immediately after the inlet opening 7, in which the cleaning liquid 13 is sprayed onto the filter material 15, has a length of, for example, 1.5 meters. During rinsing, the ammonia-polluted stable air 3 will carry liquid particles along the longitudinal direction of the filter material 15 and deliver the cleaning liquid 13 to the filter material 15. The advantage of this is that few or no liquid particles at the end of the filter material 15 are taken outside by the stable air.

The filter material 15 has, among other things, the function of keeping the acidified water (cleaning liquid 13), which has to bind the ammonia from the stable air 3, constant within a certain temperature range. If the temperature of the water would increase too much, the molecules that bind the ammonia in the water will move faster, allowing them to escape from the water more easily and the ammonia will be released more easily into the stable air flowing by (increase vapor molecules). The filter material 15 has a certain minimum length (for example 7 to 8 meters) with the aim of achieving sufficient cooling capacity and to function as a moisture trap to prevent the acidified water particles from escaping from the unit.

The time interval between the spraying periods is continuously adapted to the degree of humidification of the stable air 3 and/or of the filter material 15. Furthermore, in the inlet opening 7 and in the outlet opening 9, the ammonia content of the stable air 3 entering and leaving the air scrubber is measured and the amount, time interval and pH value of the cleaning liquid 13 to be sprayed is adapted to the measured values.

The size of the flushing area (this is the area that is directly wetted by the nozzles), the spraying time and the pH value of the cleaning liquid can be varied depending on the conditions of the outside air (passing through the cooling bodies) and the stable air and on the temperature of the cleaning liquid. Control software determines an optimum between these key figures before control is regulated. By continuously measuring the ammonia concentration of the ingoing and outgoing stable air, the nozzles, fans, acidification of the cleaning liquid, etc. can be optimally controlled by means of driver software.

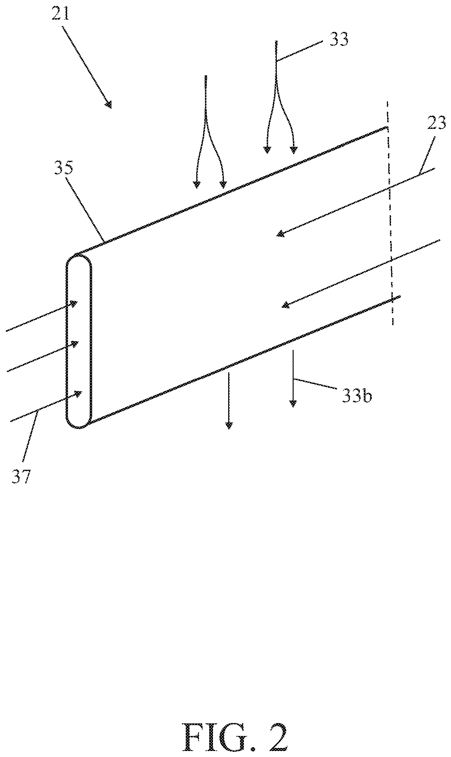

Figure 2 shows one of the cooling bodies 35 of a second embodiment of the device 21 according to the invention, with the air and liquid flows around it. This device 21 has a number of cooling bodies located next to each other at a mutual distance parallel to each other. A hollow flat tube is used as the cooling body 35 (the tube can also have a different shape, for example round, oval, etc.). The flat tube is preferably made of a material which is resistant to acids. Furthermore, the tube preferably has a small wall thickness and the tube is preferably made of a material that has a good thermal conductivity coefficient.

Contaminated stable air 23 is fed (sucked) along the outer surface of this cooling body, and at the same time a cleaning liquid 33 with a low Ph (preferably less than 4) is sprayed from above onto the cooling body 35. In this embodiment, water with sulfuric acid is used as the cleaning liquid 33. The ammonia in the polluted stable air 23 is absorbed in the cleaning liquid 33. At the bottom side of the cooling body 35, cleaning liquid 33b and ammonia in the cleaning liquid flows from the cooling body 35.

On the inside of the cooling body 35, outside air 37 flows inwards (suctioned or blown in). This outside air 37 always has a lower temperature than the polluted stable air 23. For this reason the cooling body 35 is cooled and the cleaning liquid 33 will therefore also cool down. Because the capacity to absorb ammonia increases at a lower temperature, the efficiency for absorbing ammonia increases.

Although the present invention is elucidated above on the basis of the given drawings, it should be noted that this invention is not limited whatsoever to the embodiments shown in the drawings. The invention also extends to all embodiments deviating from the embodiments shown in the drawings within the scope of the invention defined by the appended claims.

## Claims

1. A method for removing ammonia from stable air (3; 23), wherein stable air in a livestock shed is led to the outside via an air scrubber (1; 21) and outside air (5) is fed in, which air scrubber (1) is provided with an inlet opening (7) through which the stable air (3; 23) enters the air scrubber and an outlet opening (9) through which the cleaned stable air (3; 23) is let out, into which air scrubber (1; 21) the stable air (3; 23) is passed over a cooling body (15; 35) and thereby contacts an outer surface of the cooling body (15; 35) and in which air scrubber (1) this outer surface of the cooling body (15; 35) is moistened by a first fluid being a cleaning liquid (13; 33), as cleaning liquid (13; 33) a liquid having a pH of less than 5 is used and the cooling body (15; 35) is cooled by a second fluid being different of the first fluid and being a cooling medium (17; 37), wherein the cooling body (15; 35) is hollow, comprises filter material and is cooled by contacting an inner surface of the filter material with the cooling medium (17; 37), **characterized in that** outside air is used as the cooling medium (17; 37) which is sucked or blown from outside the stable into the stable through the hollow cooling body (15; 35).

2. Method according to claim 1, **characterized in that** a cooling body (15; 35) is used which comprises filter material.

3. Method according to claim 1 or 2, **characterized in that** a tube is used as the cooling body (35).

4. Method according to claim 3, **characterized in that** a flat tube is used as the cooling body (35).

5. Method according to any one of the preceding claims, **characterized in that** periodically cleaning liquid (13; 33) is sprayed on the outer surface of the cooling body (15; 35).

6. Method according to claim 5, **characterized in that** the time interval between spraying periods is adapted to the degree of humidification of the stable air (3; 23) and/or of the cooling body (15; 35).

7. Method according to claim 5 or 6, **characterized in that** in the inlet opening (7) and in the outlet opening (9) the ammonia content of the stable air (3; 23) entering the air scrubber (1) and leaving the air scrubber is measured and the amount, time interval and pH value of the cleaning liquid (13; 33) to be sprayed is adjusted to the measured values.

## Patentansprüche

1. Verfahren zum Entfernen von Ammoniak aus Stallluft (3; 23), wobei Stallluft in einem Viehstall über einen Luftwäscher (1; 21) nach außen geleitet und Außenluft (5) zugeführt wird, wobei der Luftwäscher (1) eine Einlassöffnung (7), durch die die Stallluft (3; 23) in den Luftwäscher eintritt, und eine Auslassöffnung (9), durch die die gereinigte Stallluft (3; 23) ausgelassen wird, aufweist, wobei die Stallluft (3; 23) in dem Luftwäscher (1; 21) über einen Kühlkörper (15; 35) geleitet wird und dabei eine Außenfläche des Kühlkörpers (15; 35) berührt, und wobei in dem Luftwäscher (1) diese Außenfläche des Kühlkörpers (15; 35) mit einem ersten Fluid, einer Reinigungsflüssigkeit (13; 33), befeuchtet wird, wobei als Reinigungsflüssigkeit (13; 33) eine Flüssigkeit mit einem pH-Wert von weniger als 5 verwendet wird und der Kühlkörper (15; 35) durch ein zweites Fluid gekühlt wird, das sich vom ersten Fluid unterscheidet und ein Kühlmedium (17; 37) ist, wobei der Kühlkörper (15; 35) hohl ist, besteht aus Filtermaterial und durch Kontakt einer Innenfläche des Filtermaterials mit dem Kühlmedium (17; 37) gekühlt wird,
**dadurch gekennzeichnet, dass** als Kühlmedium (17; 37) Außenluft verwendet wird, die von außerhalb des Stalles durch den hohlen Kühlkörper (15; 35) in den Stall gesaugt oder geblasen wird.

2. Verfahren nach Anspruch 1, **dadurch gekennzeichnet, dass** ein Kühlkörper (15; 35) verwendet wird, der Filtermaterial enthält.

3. Verfahren nach Anspruch 1 oder 2, **dadurch gekennzeichnet, dass** als Kühlkörper (35) ein Rohr verwendet wird.

4. Verfahren nach Anspruch 3, **dadurch gekennzeichnet, dass** als Kühlkörper (35) ein Flachrohr verwendet wird.

5. Verfahren nach einem der vorhergehenden Ansprüche, **dadurch gekennzeichnet, dass** periodisch Reinigungsflüssigkeit (13; 33) auf die Außenfläche des Kühlkörpers (15; 35) gesprüht wird.

6. Verfahren nach Anspruch 5, **dadurch gekennzeichnet, dass** der Zeitabstand zwischen den Sprühperioden an den Befeuchtungsgrad der Stallluft (3; 23) und/oder des Kühlkörpers (15; 35) angepasst wird.

7. Verfahren nach Anspruch 5 oder 6, **dadurch gekennzeichnet, dass** in der Einlassöffnung (7) und in der Auslassöffnung (9) der Ammoniakgehalt der in den Luftwäscher (1) eintretenden und diesen verlassenden Stallluft (3; 23) gemessen wird und Menge, Zeitintervall und pH-Wert der zu sprühenden Reinigungsflüssigkeit (13; 33) an die gemessenen Werte angepasst werden.

## Revendications

1. Procédé d'élimination de l'ammoniac de l'air d'une étable (3 ; 23), dans lequel l'air d'une étable est évacué vers l'extérieur via un épurateur d'air (1 ; 21) et de l'air extérieur (5) est introduit, l'épurateur d'air (1) est pourvu d'une ouverture d'entrée (7) par laquelle l'air d'étable (3 ; 23) pénètre dans l'épurateur d'air et d'une ouverture de sortie (9) par laquelle l'air d'étable épuré (3 ; 23) est évacué, dans cet épurateur d'air (1 ; 21), l'air d'étable (3 ; 23) passe sur un corps de refroidissement (15 ; 35) et entre ainsi en contact avec une surface extérieure de ce corps de refroidissement (15 ; 35), dans cet épurateur d'air (1), cette surface extérieure du corps de refroidissement (15 ; 35) est humidifiée par un premier fluide, un liquide de nettoyage (13 ; 33), un liquide ayant un pH inférieur à 5 étant utilisé comme liquide de nettoyage (13 ; 33), le corps (15 ; 35) est refroidi par un second fluide, différent du premier, qui constitue un fluide de refroidissement (17 ; 37), le corps de refroidissement (15 ; 35) est creux et comprend un matériau filtrant, son refroidissement est assuré par la mise en contact de la surface intérieure du matériau filtrant avec le fluide de refroidissement (17 ; 37),
le procédé est **caractérisé en ce que** l'air extérieur (17 ; 37) est aspiré ou soufflé de l'extérieur de l'écurie vers l'intérieur à travers le corps de refroidissement creux (15 ; 35).

2. Procédé selon la revendication 1, **caractérisé en ce qu'**un corps de refroidissement (15 ; 35) comprend un matériau filtrant.

3. Procédé selon la revendication 1 ou 2, **caractérisé en ce qu'**un tube (35) est utilisé comme corps de refroidissement.

4. Procédé selon la revendication 3, **caractérisé en ce qu'**un tube plat (35) est utilisé comme corps de refroidissement.

5. Procédé selon l'une quelconque des revendications précédentes, **caractérisé en ce que** du liquide de nettoyage (13 ; 33) est pulvérisé périodiquement sur la surface extérieure du corps de refroidissement (15 ; 35).

6. Procédé selon la revendication 5, **caractérisé en ce que** l'intervalle de temps entre les pulvérisations est adapté au degré d'humidification de l'air de l'étable (3 ; 23) et/ou du corps de refroidissement (15 ; 35).

7. Procédé selon la revendication 5 ou 6, **caractérisé en ce que** la teneur en ammoniac de l'air de l'étable (3 ; 23) entrant dans l'épurateur d'air (1) et sortant de celuici est mesurée dans l'ouverture d'entrée (7) et dans l'ouverture de sortie (9), et la quantité, l'intervalle de temps et le pH du liquide de nettoyage (13 ; 33) à pulvériser sont ajustés aux valeurs mesurées.
